# EUROPEAN PATENT SPECIFICATION

(11) **EP 0 693 645 B1**
(45) Date of publication and mention of the grant of the patent: **10.05.2000**
(21) Application number: 95630059.4
(22) Date of filing: 08.06.1995
(51) Int. Cl.: F16J 15/12, F16J 15/02

(54) **Gasket for refrigerant compressors**
Flachdichtung für Kältemittelverdichter
Joint plat pour compresseur de réfrigérant

(30) Priority: 24.06.1994 US 265486
(43) Date of publication of application: 24.01.1996
(73) Proprietor: CARRIER CORPORATION, Syracuse New York 13221 (US)
(72) Inventor: Dormer, Michael J., Fabius, New York 13063 (US); Kaido, Peter F., Verona, New York 13478 (US); Kneeskern, David F., Pennellville, New York 13132 (US)
(74) Representative: Weydert, Robert

(56) References cited:
- DE-U- 7 336 951
- GB-A- 2 169 362
- US-A- 4 728 111

## Description

When sealing between members of a device subject to containing pressurized fluid, it is common to locate a seal or gasket between the members separating regions of different pressure. Typically, bolts, or the like, are drawn tight forcing the members into contact with the seal or gasket, which is deformed, thereby achieving a fluid seal. Problems can arise due to minute deflections of the members as a result of the pressure of the fluid being sealed, and where the bolts are not tightened or spaced uniformly, thereby favoring leakage in lightly loaded regions. In addition, the fluid being sealed may, or may not, react physically or chemically with the seal material.

To improve sealing capability it is known to use gaskets having a swelling agent to produce gasket swelling in water and oil, note US-A-4,728,111 on which the precharacterizing portion of independent of claim 1 is based. The known swelling gasket has a base swelling sheet, a swelling layer on one side of the base swelling sheet and a non-swelling sheet and an adhesive layer on the other side of the base swelling sheet. The swelling gasket provides additional load to lightly loaded areas of the gasketed joint.

In GB-A-2,169,362 a cylinder gasket is disclosed having a base sheet coated with an elastomer material and in DE-U-73 36 951 a seal is disclosed having a metal core provided with a coating of fluorine based plastic material.

The object of the invention is to provide a swelling gasket suitable for use with fluid media containing HFC refrigerant.

To achieve this there is provided in accordance with the invention a gasket adapted to be located between two members drawn together so as to produce a fluid seal therebetween, said gasket having means consisting of a material that swells when exposed to the fluid media being sealed, characterized in that said gasket has a metal core and said means consisting of a swelling material being an elastomeric coating covering said core, said elastomeric coating being of a fluoroelastomer caused to swell when the gasket is exposed to fluid media containing HFC refrigerant.

The swelling gasket of the invention achieves proper sealing without extrusion of the coating material. Preferably, the thickness of the fluoroelastomer coating is less than 1.27 mm (0.05 inches).

The gasket stress is increased via the gasket rather than through external loads. The net gasket stress is increased inversely with preload so as to effectively achieve a self-compensating joint.

It is an additional effect of this invention to localize increased loading whereby loads do not become excessive.

The coating has volume swell characteristics sufficient to augment the clamping load applied to the gasket, when the clamping load is insufficient, while minimizing extrusion of the coating.

Basically, a metal gasket is coated with an elastomeric material that will swell when exposed to the working fluid(s) it seals such that additional load is provided to lightly loaded areas of the gasketed joint. Further, as the members deflect under pressure loading, the swelling action of the elastomer, effectively, provides resiliency to compensate for the loss of gasket stress.

In the drawing :
Figure 1 is a partial section view of a gasketed joint employing the gasket of the present invention; and
Figure 2 is an enlarged view of a portion of the gasket.

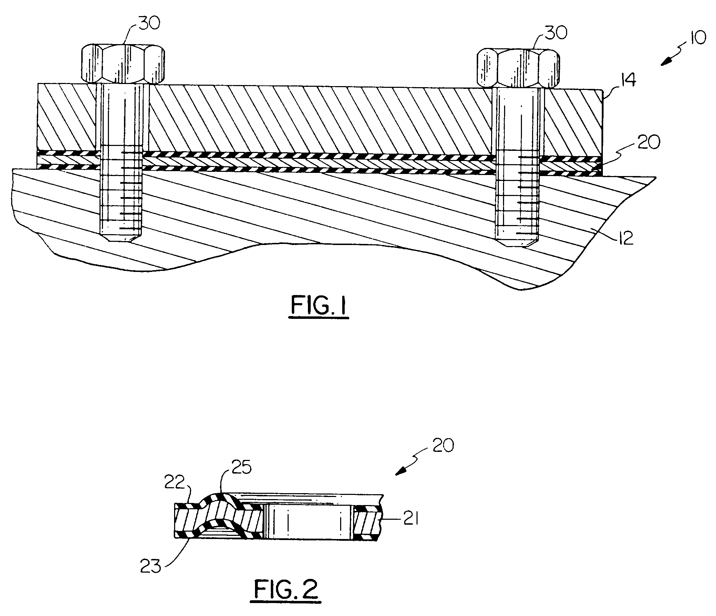

In Figure 1, the numeral 10 generally designates a refrigerant compressor having a cylinder block 12 and a cylinder head 14. Gasket 20 is located between block 12 and head 14 which are drawn into sealing engagement with gasket 20 by bolts 30. The drawing tight of bolts 30 produces a deformation of gasket 20. As best shown in Figure 2, gasket 20 has a metal core 21 and upper and lower elastomeric coatings 22 and 23 bonded thereto. The gasket 20 has a curved portion 25 that effectively thickens gasket 20 relative to contact by cylinder head 14 as well as providing a spring bias in that the curved portion 25 tends to be flattened as bolts 30 are drawn tight. The metal core 21 is, typically, a steel based material and is necessary to minimize the effects of compression set, and subsequent loss of gasket load, that is typical with fiber based materials. The elastomeric coatings 22 and 23 are chosen both as to material and thickness so as to provide volume swell characteristics, when exposed to the fluid(s) to be sealed, sufficient to augment the clamping load applied to gasket 20 when the clamping load is insufficient such as due to the spacing or loading of bolts 30. The graph of the loading between two bolts would approximate a catenary with the maximum loading near bolts 30 and with the smallest loading at the midpoint between the two bolts. This loading is due to the fact that block 12 and cylinder head 14 are elastic relative to the forces and deflections of interest. Additionally, elastomeric coatings 22 and 23 must be applied in a layer that is thin enough to minimize extrusion of the coatings, yet thick enough to provide sufficient volume swell and sealiability.

Where compressor 10 is compressing HFC refrigerant R134a, a blend containing HFC refrigerant R125, such as refrigerant R404a which is a blend of R125, R134a and R143a, or HFC refrigerant R507, a blend of R143a and R125, polyol ester (POE) synthetic lubricant will normally be used. Coatings 21 and 22 will, preferably, be of a fluoroelastomer, such as Viton®, with a thickness of 0.127 to 0.508 mm (.005 to .02 inches). The refrigerant will cause the coatings 21 and 22 to swell but the POE has no apparent influence thereon. The amount of swell that is achieved by the elastomer coatings 21 and 22 is a function of the gasket preload, as is the initial sealing prior to swell. When the preload is about 55,200 kPa (8000 psi), the swelling cannot augment the gasket stress provided by the preload. However, at lower loading the swelling is inverse to the preloading so that swelling, and therefore increased loading, takes place to the greatest degree in the lightest preloaded areas with little or no increased gasket stress in the heavily preloaded areas.

The present invention is applicable to all HFC refrigerants. However, the elastomeric coating and its thickness will have to be matched to the specific refrigerant-lubricant combination.

## Claims

1. A gasket (20) adapted to be located between two members drawn together so as to produce a fluid seal therebetween, said gasket having means consisting of a material that swells when exposed to the fluid media being sealed, characterized in that said gasket (20) has a metal core (21) and said means consisting of a swelling material being an elastomeric coating (22, 23) covering said core (21), said elastomeric coating being of a fluoroelastomer caused to swell when the gasket (20) is exposed to fluid media containing HFC refrigerant.

2. A gasket (20) according to claim 1, characterized in that the coating (22, 23) is less than 1.27 mm (0.05 inches) thick.

3. A gasket (20) according to claim 1 or 2, characterized in that said swelling produced by said fluid media is inversely to loading forces on said gasket (20).

## Patentansprüche

1. Dichtung (20) zum Einbau zwischen Bauteilen, die zusammengezogen sind, um eine Fluidabdichtung dazwischen zu schaffen, wobei die Dichtung mit Mittel versehen ist bestehend aus einem Werkstoff, der aufquellt, wenn er dem abgedichteten Fluidmedium ausgesetzt ist, dadurch gekennzeichnet, dass die Dichtung (20) einen Metallkern (21) hat und dass das aus einem aufquellenden Werkstoff bestehende Mittel eine Elastomerbeschichtung (22, 23) ist, die den Kern (21) überzieht, wobei die Elastomerbeschichtung ein Fluorelastomer ist, das aufquellt wenn die Dichtung (20) einem Fluidmedium ausgesetzt ist, das HFC-Kühlmitel enthält.

2. Dichtung (20) nach Anspruch 1, dadurch gekennzeichnet, dass die Beschichtung (22, 23) weniger als 1,27 mm (0,05 Zoll) dick ist.

3. Dichtung (20) nach Anspruch 1 oder 2, dadurch gekennzeichnet, dass das durch das Fluidmedium erzeugte Aufquellen umgekehrt ist zu den an der Dichtung (20) angelegten Belastungskräften.

## Revendications

1. Joint d'étanchéité (20) conçu en vue d'être disposé entre deux éléments tirés ensemble en vue de produire un joint étanche au fluide entre ces éléments, ce joint d'étanchéité ayant un moyen consistant en une matière qui gonfle lorsqu'elle est exposée au milieu fluide étanchéifié, caractérisé en ce que le joint (20) a un corps métallique (21) et en ce que le moyen consistant en une matière gonflable est un revêtement élastomère (22, 23) recouvrant le noyau (21), le revêtement élastomère étant un fluoroélastomère qui est causé de gonfler lorsque le joint (20) est exposé à un milieu fluide contenant du réfrigérant HFC.

2. Joint d'étanchéité (20) selon la revendication 1, caractérisé en ce que le revêtement (22, 23) a une épaisseur inférieur à 1,27 mm (0,05 pouce).

3. Joint d'étanchéité (20) selon la revendication 1 ou 2, caractérisé en ce que le gonflement produit par le milieu fluide est inverse à la charge appliquée au joint d'étanchéité (20).
